# EUROPEAN PATENT APPLICATION

(11) **EP 1 033 795 A2**
(43) Date of publication of application: **06.09.2000**
(21) Application number: 00301646.6
(22) Date of filing: 01.03.2000
(51) Int. Cl.: H01S 3/067, G02B 6/16

(54) **Double cladding optical fiber and optical fiber amplifier**

(30) Priority: 01.03.1999 JP 5282899
(71) Applicant: NEC CORPORATION, Tokyo (JP)
(72) Inventor: Toyohara, Atsushi, Minato-ku, Tokyo (JP)
(74) Representative: Moir, Michael Christopher

(57) **Abstract**

A double-cladding fiber and an optical fiber amplifier, which have an equivalent function to a pumping-light cut filter with a simple structure, are provided. With the double-cladding fiber, a core transmitting a signal light is covered with a first clad having a refractive index of n7b. This first clad is covered with a second clad. At an output end, a designated length of the second clad is removed and a substance having a refractive index of "n" ("n" > n7b) is coated on the first clad on the part from which the second clad is removed. With this structure, a remaining pumping light, after the signal light is pumped by a pumping laser diode, leaks to this coated part. The substance-coated part works as a filter for the remaining pumping light. As a result, a signal-to-noise ratio (SNR) of the amplified signal light can be improved with this simple structure.

## Description

### BACKGROUND OF THE INVENTION

The present invention relates to a double-cladding fiber and an optical fiber amplifier, in which a leaked pumping light is suppressed in the double-cladding fiber as an amplifying medium.

### Description of the Related Art

With a conventional double-cladding fiber and a conventional optical fiber amplifier, a signal light is amplified by injecting at the same time both the signal light to be amplified and a pumping light giving amplifying action into an optical fiber that is an amplifying medium. There are three schemes for injecting the signal light and the pumping light. The first one is a forward-pumping scheme in which the signal light and the pumping light are injected in the same transmitting direction, and the second one is a backward-pumping scheme in which the signal light and the pumping light are injected in facing directions, and the last one is a bi-directional pumping scheme in which the pumping light is injected from both directions for the signal light.

In these schemes, with the forward-pumping scheme in which the pumping light is injected in the transmitting direction of the signal light, or with the bi-directional pumping scheme in which the pumping light is injected from both directions, the signal light and the pumping light are output from an output end at the same time. This pumping light power simply acts as noise for the signal light power, as a result, a signal-to-noise ratio (SNR) at the output end is deteriorated.

In order to suppress this kind of deterioration, generally a long-wavelength pass filter (LWPF), or a filter palled a pumping-light cut filter, is installed at the output end.

The amplifying medium currently widely adopted is called an erbium-doped fiber (EDF), and its structure is composed of a core in which the light is transmitted and a clad covering the core. Furthermore, at the EDF, a high-power-outputting optical fiber amplifier has been developed with difficulty, and for this high-power-outputting optical fiber, an optical fiber called a double-cladding fiber is used as the amplifying medium.

As conventional applications, laid-open Japanese Patent Application No. HEI 10-51050 discloses an optical fiber for amplification in which a double-cladding fiber for amplification and an optical fiber used generally for transmission are fused together easily. And laid-open Japanese Patent Application No. HEI 10-51062 discloses an optical fiber for amplification in which the influence of a micro-bending loss is reduced and the connecting process of the end of the optical fiber simplified.

However, with the conventional double-cladding fibers mentioned above, a plurality of optical fibers are used as the amplifying medium. As a result, there is a problem that the structure in which a double-cladding fiber is used with a pumping-light cut filter having high efficiency becomes complex.

### SUMMARY OF THE INVENTION

It is therefore an object of the preferred embodiments of the present invention to provide a double-cladding fiber and an optical fiber amplifier in which an equivalent function to a pumping-light cut filter having high efficiency is realized with a simple structure.

According to a first aspect of the present invention, there is provided a double-cladding fiber, which includes a core, whose refractive index is n7a and which transmits a signal light. A first clad surrounds the core and has a refractive index n7b, and a second clad surrounds the first clad and has a refractive index n7c. The second clad is absent from a length of the double-cladding fiber, and that part of the first clad from which the first clad is absent is coated with a substance which in operation effects removal of light passing along the first clad.

According to a second aspect of the present invention, there is provided a double-cladding fiber, which includes a core, whose refractive index is n7a and which transmits a signal light. A first clad surrounds the core and has a refractive index n7b, and a second clad surrounds the first clad and has a refractive index n7c. The second clad is absent from a length of the double-cladding fiber, and that part of the first clad from which the first clad is absent is coated with a substance whose refractive index is greater than that (n7b) of the first clad.

According to a third aspect of the present invention, there is provided an optical fiber amplifier, which includes: a wavelength-division multiplex (WDM) coupler, to which a signal light and a pumping light are inputted; an isolator from which an amplified signal light is outputted; and, a double-cladding fiber which connects between said WDM coupler and said isolator. The double-cladding fiber consists of a core, whose refractive index is n7a; a first clad, whose refractive index is n7b, surrounding said core; and, a second clad, whose refractive index is n7c, surrounding said first clad. A length of said second clad is absent from said double-cladding fiber, and a length of the first clad from which the second clad is absent is coated with a substance which in operation effects removal of light passing along the first clad.

According to a fourth aspect of the present invention, there is provided an optical fiber amplifier, which includes: a wavelength-division multiplex (WDM) coupler, to which a signal light and a pumping light are inputted; an isolator from which an amplified signal light is outputted; and, a double-cladding fiber which connects between said WDM coupler and said isolator. The double-cladding fiber consists of: a core, whose refractive index is n7a; a first clad, whose refractive index is n7b, surrounding said core; and, a second clad, whose refractive index is n7c, surrounding said first clad. A length of said second clad is absent from said double-cladding fiber, and a length of the first clad from which the second clad is absent is coated with a substance whose refractive index is greater than that (n7b) of the first clad.

The second clad may be absent from the output end of the double-cladding fiber by having been removed therefrom. The length of second clad that is absent may be at an output end of the double-cladding fiber.

Other preferred but optional features are as set out in the subordinate claims.

### BRIEF DESCRIPTION OF THE DRAWINGS

Preferred features of the present invention will now be described, by way of example only, with reference to the accompanying drawings, in which:-
Fig. 1 is a diagram showing a structure of an embodiment of an optical fiber amplifier of the present invention, using a double-cladding fiber;
Fig. 2 is a sectional view of a first double-cladding fiber of the present invention, having a structure of concentric circles;
Fig. 3 is a sectional view of a second double-cladding fiber of the present invention, in which the first clad has a rectangularly-shaped structure; and,
Fig. 4 is a sectional view of a third double-cladding fiber of the present invention, having a structure in which a core is positioned off-center.

### DESCRIPTION OF THE PREFERRED EMBODIMENTS

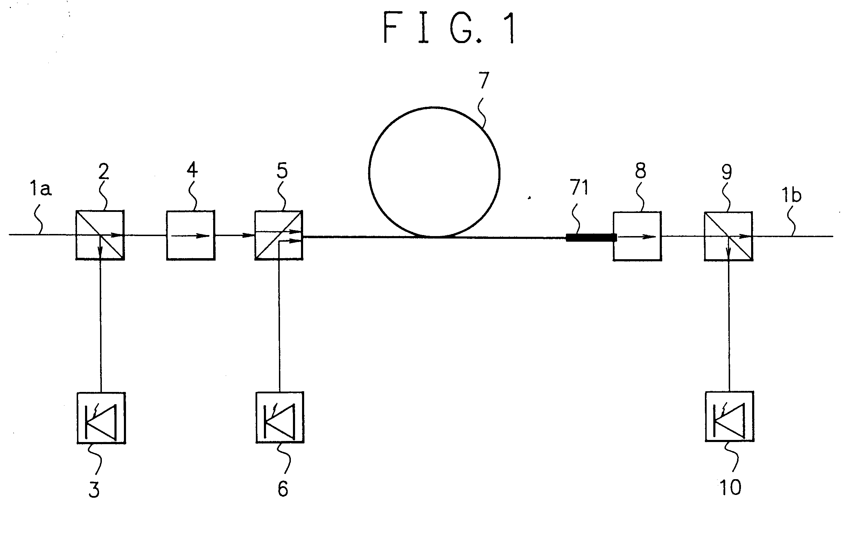

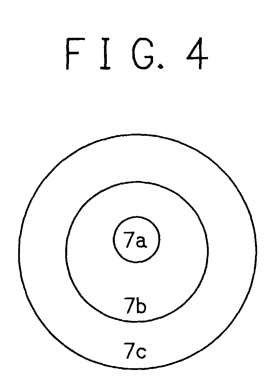

Referring now to the drawings, an embodiment of the present invention is explained in detail. The embodiment of a double-cladding fiber and an optical fiber amplifier of the present invention is shown in Figs. 1 to 4.

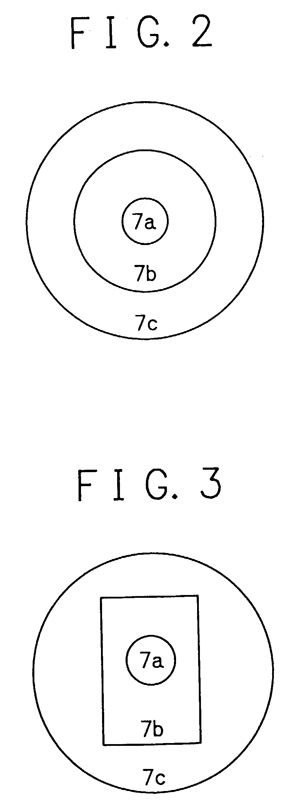

As the same effect can be achieved by using any of the first or second or third double-cladding fibers, the embodiment is explained by using the first double-cladding fiber having the structure of concentric circles shown in Fig. 2. As shown in Fig. 2, a double-cladding fiber 7 in Fig. 1 is composed of a core 7a, a first clad 7b and a second clad 7c. The core 7a transmits a signal light and has a "n7a" refractive index. And a small amount of rare-earth element is doped in the core 7a. The core 7a is covered with the first clad 7b whose refractive index is "n7b"; the first clad 7b is covered with the second clad 7c whose refractive index is "n7c". In this, the refractive indices are related such that "n7a" > "n7b" > "n7c".

A light used for amplification, called a pumping light, is input to the first clad 7b. The pumping light pumps the rare-earth element in the core 7a and acts to amplify the signal light. The second clad 7c is provided to keep the pumping light within the first clad 7b.

As shown in Fig. 1, a signal light is input to the core 7a of a double-cladding fiber 7 from a transmission line 1a via an optical splitter 2, an isolator 4, a wavelength-division multiplex (WDM) coupler 5. The inputted signal light is split at the optical splitter 2; a part of the inputted signal light is inputted to a photodiode for monitoring input 3.

The WDM coupler 5 is connected to a pumping laser diode 6, and makes a pumping light power of the pumping laser diode 6 optically coupled to the first clad 7b of the double-cladding fiber 7. Almost all the output from the double-cladding fiber 7 is an amplified signal light, but a part of the pumping light is leaked without being used for amplification. This amplified signal light is outputted to a transmission line 1b via an isolator 8 and an optical splitter 9. At the optical splitter 9, the amplified signal light is split and a part of the amplified signal light is inputted to a photodiode for monitoring output 10 of the amplified signal light.

At an output end 71 of the double-cladding fiber 7, a designated length of the second clad 7c is removed, and a substance whose refractive index is "n" ("n" > n7b) is coated on the part of the first clad 7b from which the second clad has been removed.

The signal light has a wavelength in the 1550-nm band and is inputted to the double-cladding fiber 7 from the transmission line 1a via a fusing coupler in the optical splitter 2, which splits the signal light in a ratio of about nine-to-one, the isolator 4 and the WDM coupler 5. At the optical splitter 2, about 10% of the inputted signal light is inputted to the photodiode for monitoring input 3. As mentioned above, the sectional structure of the double-cladding fiber 7 used in this embodiment is composed of the core 7a, the first clad 7b and the second clad 7c, as shown in Fig. 2, and the core and the clads are concentric circles, and their diameters ⌀ are about 4 µm, 125 µm and 185 µm, respectively.

A small amount of rare-earth element is doped in the core 7a for transmitting the signal light, whose refractive index is "n7a". In this embodiment, erbium is doped as the rare-earth element. Therefore, as the pumping laser diode 6, a laser diode having a 1480-nm wavelength band is adopted for pumping the erbium. And at the output end 71 of the double-cladding fiber 7, about 50 mm of the second clad 7c is removed mechanically, and the output end 71 is fused with the input end fiber of the isolator 8, in which the fiber diameter is about 125 µm.

The part from which the second clad 7c is removed is coated with an epoxy resin whose refractive index is about 1.6. An output end of the isolator 8 connects to a fusing coupler of the optical splitter 9, which splits the amplified signal light into a ratio of about nine-to-one, and about 10% of the amplified signal light is outputted to the photodiode for monitoring output 10. The remaining about 90% is output to the transmission line 1b.

As the rare-earth element doped to the double-cladding fiber, neodymium (Nd) can be used instead of erbium (Er). However, in this case, a 0.8-µm band must be used as the wavelength of the signal light, and a 1.1-µm band must be used as the wavelength of the pumping laser diode 6. In the case of an erbium-doped fiber, as the wavelength of the pumping light, a 980-nm band can be used instead of a 1480-nm band.

Moreover, if the refractive index "n" of the coating material satisfies the condition "n" > "n7b", any adhesive or dielectric resin can be used to coat the output end 71 of the double-cladding fiber 7. Furthermore, from the view point of light absorption, a following process has the same effect, that is, a metal film made of chromium (Cr) or titanium (Ti) is formed on the outer surface of the first clad 7b by vapor deposition, or a conductive resin whose main material is silver is coated on the outer surface of the first clad 7b.

Next an operation of the embodiment is explained. A signal light of a 1.55-µm band, for example, having a wavelength of 1545 nm, is input to the core 7a of the double-cladding fiber 7 from the transmission line 1a via the optical splitter 2, the isolator 4 and the WDM coupler 5. A pumping light from the pumping laser diode 6 is inputted to the first clad 7b of the double-cladding fiber 7 from the same side of the signal light via the WDM coupler 5. At this time, a part of the pumping light is also inputted to the core 7a of the double-cladding fiber 7.

Inside of the double-cladding fiber 7, the pumping light transmits in a zigzag inside of the first clad 7b; in this process, the pumping light transmits across the core 7a. When the pumping light transmits across the core 7a, the energy is transferred to the signal light via erbium; therefore, the signal light is amplified.

Inside of the first clad 7b, the pumping light transmits in a multi-mode, and a part of the pumping light not transmitted across the core 7a remains, and this remaining part is output with the amplified signal light. However, at the output end 71 of the double-cladding fiber 7, the length of about 50 mm of the second clad 7c is removed, and the part of the first clad 7b from which the second clad 7c is removed is coated with an adhesive, whose refractive index is 1.6. Therefore, at this about-50-mm-length region, the pumping light transmitted in the first clad 7b leaks to the adhesive side. As a result, the pumping light is not output from the output end of the first clad 7b.

On the other hand, the signal light transmitted in the core 7a is not influenced by the adhesive in a relationship with the refractive index of the first clad 7b, and is outputted.

In an experiment, a signal-to-noise ratio (SNR) of the signal light in the transmission line 1b is measured by using an oscilloscope. At an optical fiber amplifier, in which the second clad 7c is not removed, that is, the present invention is not applied, the SNR was about 9 dB. However, with the double-cladding fiber and the optical fiber amplifier to which the present invention is applied, the SNR is largely improved to 11dB.

As another embodiment of the present invention, at the output end of the double-cladding fiber 7, after the second clad 7c is removed, the following process can be applied; a silver paste is coated onto where the part has been removed, or a metal film made of chromium (Cr) or titanium (Ti) is formed by vapor deposition or is sputtered onto that area. These processes have also the effect of removing the pumping light.

As mentioned above, the present invention can realize an equivalent effect to a pumping-light cut filter with a simple structure of a double-cladding fiber and an optical fiber amplifier.

With the embodiments of the present invention, the second clad 7c of the output end 71 of the double-cladding fiber 7 is removed, and a substance having a higher refractive index than the first clad 7b is coated on where the part was removed. With this, the pumping light is cut and the SNR of the outputting signal light can be largely improved.

As mentioned above, at the double-cladding fiber of the present invention, the surrounding surface of the core 7a transmitting the signal light is covered with the first clad 7b whose refractive index is "n7b", and the first clad 7b is covered with the second clad 7c. And a designated length of the output end of the second clad 7c is removed, and a substance whose refractive index is "n" ("n" > "n7b") is coated on the first clad 7b at the removed part of second clad 7c. With this structure, after the signal light is pumped, the remaining pumping light leaks to this coated part. That is, the part coated with the substance can work as a filter for the pumping light. As a result, the SNR of the transmitting signal light can be largely improved.

While the present invention has been described with reference to the particular illustrative embodiment, it is not to be restricted by this embodiment but only by the appended claims. It is to be appreciated that those skilled in the art can change or modify the embodiment without departing from the scope of the present invention.

Each feature disclosed in this specification (which term includes the claims) and/or shown in the drawings may be incorporated in the invention independently of other disclosed and/or illustrated features.

The text of the abstract filed herewith is repeated here as part of the specification.

A double-cladding fiber and an optical fiber amplifier, which have an equivalent function to a pumping-light cut filter with a simple structure, are provided. With the double-cladding fiber, a core transmitting a signal light is covered with a first clad having a refractive index of n7b. This first clad is covered with a second clad. At an output end, a designated length of the second clad is removed and a substance having a refractive index of "n" ("n" > n7b) is coated on the first clad on the part from which the second clad is removed. With this structure, a remaining pumping light, after the signal light is pumped by a pumping laser diode, leaks to this coated part. The substance-coated part works as a filter for the remaining pumping light. As a result, a signal-to-noise ratio (SNR) of the amplified signal light can be improved with this simple structure.

## Claims

1. A double-cladding fiber, comprising:
a core for transmitting a signal light and having a first refractive index n7a;
a first clad surrounding the core and having a second refractive index n7b; and,
a second clad surrounding the first clad and having a third refractive index n7c;
wherein said second clad is absent from a length of the double-cladding fiber, and
wherein that part of the first clad from which the second clad is absent is coated with a substance which in operation effects removal of light passing along the first clad.

2. A double-cladding fiber, comprising:
a core for transmitting a signal light and having a first refractive index n7a;
a first clad surrounding the core and having a second refractive index n7b; and,
a second clad surrounding the first clad and having a third refractive index n7c;
wherein said second clad is absent from a length of the double-cladding fiber, and
wherein that part of the first clad from which the second clad is absent is coated with a substance whose refractive index is greater than that (n7b) of the first clad.

3. An optical fiber amplifier, comprising:
a wavelength-division multiplex (WDM) coupler, to which a signal light and a pumping light are inputted;
an isolator from which an amplified signal light is outputted; and,
a double-cladding fiber which connects between said WDM coupler and said isolator, and consists of:
a core, whose refractive index is n7a;
a first clad, whose refractive index is n7b, surrounding said core; and,
a second clad, whose refractive index is n7c, surrounding said first clad;
wherein a length of said second clad is absent from said double-cladding fiber, and
wherein a length of the first clad from which the second clad is absent is coated with a substance which in operation effects removal of light passing along the first clad.

4. An optical fiber amplifier, comprising:
a wavelength-division multiplex (WDM) coupler, to which a signal light and a pumping light are inputted;
an isolator from which an amplified signal light is outputted; and,
a double-cladding fiber which connects between said WDM coupler and said isolator, and consists of:
a core, whose refractive index is n7a;
a first clad, whose refractive index is n7b, surrounding said core; and,
a second clad, whose refractive index is n7c, surrounding said first clad;
wherein a length of said second clad is absent from said double-cladding fiber, and
wherein a length of the first clad from which the second clad is absent is coated with a substance whose refractive index is greater than that (n7b) of the first clad.

5. A double-cladding fiber or an optical fiber amplifier in accordance with claim 1 or 3, wherein the coating substance has a refractive index greater than that (n7b) of the first clad.

6. A double-cladding fiber or an optical fiber amplifier in accordance with claim 5, wherein the coating substance is an adhesive resin.

7. A double-cladding fiber or an optical fiber amplifier in accordance with claim 1 or 3, wherein the coating substance absorbs said light passing along the first clad.

8. A double-cladding fiber or an optical fiber amplifier in accordance with claim 7, wherein the coating substance is a metal paste or film, for example, silver paste or a chromium or titanium film.

9. A double-cladding fiber or an optical fiber amplifier in accordance with any preceding claim, wherein said refractive indices are related such that n7a > n7b > n7c.

10. A double-cladding fiber or an optical fiber amplifier in accordance with any preceding claim, wherein a small amount of rare-earth element is doped in said core.

11. A double-cladding fiber or an optical fiber amplifier in accordance with any preceding claim, wherein the second clad is absent from an output end of the double-cladding fiber.
